# EUROPEAN PATENT SPECIFICATION

(11) **EP 2 661 063 B1**
(45) Date of publication and mention of the grant of the patent: **21.03.2018**
(21) Application number: 12183062.4
(22) Date of filing: 05.09.2012
(51) Int. Cl.: H04M 1/725, H04L 29/08, H04L 12/58

(54) **METHOD AND APPARATUS PERTAINING TO A CONTEXTUAL RESPONSE TO A SELECTED CONTENT ITEM**
VERFAHREN UND VORRICHTUNG FÜR EINE KONTEXTANTWORT AUF EINEN AUSGEWÄHLTEN INHALTSPUNKT
PROCÉDÉ ET APPAREIL CONCERNANT UNE RÉPONSE CONTEXTUELLE POUR UN ARTICLE DE CONTENU SÉLECTIONNÉ

(30) Priority: 01.05.2012 US 201261641051 P
(43) Date of publication of application: 06.11.2013
(73) Proprietor: BlackBerry Limited, Waterloo, ON N2K 0A7 (CA)
(72) Inventor: Pretti, Jennifer, Waterloo, Ontario N2L 3W8 (CA)
(74) Representative: Bryn-Jacobsen, Caelia

(56) References cited:
- Apple: "iPhone User Guide For iOS 5.0 Software", Apple user guides, 20 October 2011 (2011-10-20), pages 1-163, XP055019961, Retrieved from the Internet: URL:http://images.comparecellular.com/phon es/1540/Apple-iPhone-4S-User-Guide.pdf [retrieved on 2012-02-21]

## Description

### Field of Technology

The present disclosure relates to electronic devices and more particularly to reviewing and responding to displayed content.

### Background

Modern personal communications often accommodate a variety of different modes of conveying information. Examples include but are not limited to two-way voice communications, instant messages (IM) and so-called texts, Tweets, text-based chat sessions, and so forth. Each of these approaches often imposes particular restrictions (or otherwise is accompanied by ordinary expectations) regarding the type or amount of content that can be conveyed, the real-time nature of the approach, the maintenance (or lack thereof) of a corresponding informational context or thread, an ability to include or exclude other parties to the communication, and so forth.

In many cases the user must call up a particular communication approach as they would call up any application. For example, upon reading an interesting status update message on their portable communication device from a friend the user might open and access their texting application in order to send a short message to that friend as regards that status update message.

Unfortunately, such communications options can give rise to new implementation and usage issues. As one example, between the time it may take for the selected texting program to open and the fact that the texting application may now fully occupy the display and thereby remove from view the aforementioned status update message, the user may forget some or all of the details of the status update message upon which they meant to comment. As another related example, the user may feel it necessary to devote some time and text to creating the informational context for their text message (i.e., that this text message is a response to the friend's status update message).
Document XP 055019961 to Apple:iPhone User Guide iOS 5.0 Software.

The present invention is set out in the independent claims, with some optional features set out in the claims dependent thereto.

### Brief Description of the Drawings

FIG. 1 is a flow diagram in accordance with the disclosure.
FIG. 2 is a block diagram in accordance with the disclosure.
FIG. 3 is a top plan view in accordance with the disclosure.
FIG. 4 is a top plan view in accordance with the disclosure.
FIG. 5 is a top plan view in accordance with the disclosure.
FIG. 6 is a top plan view in accordance with the disclosure.

### Detailed Description

The following describes an apparatus and method pertaining to detecting a user's selection of a particular content item and responsively automatically opening a chat window in context with the selected particular content item. Upon then receiving user input in that chat window and in response to the closing of that chat window, the user input is then transmitted to a corresponding contact (such as the contact who sourced the particular content item).

By way of example, the foregoing can comprise displaying on a display one or more available status updates for one or more contacts. Upon detecting selection of a given one of the status updates a chat window is automatically opened in context with the selected status update. Upon receiving user input in that chat window and in response to the user closing that chat window the user input is transmitted to the contact.

By one approach, the chat window overlies some, but not all, of the previously displayed content. This approach can comprise, for example, overlying one or more previously-presented status updates. The foregoing notwithstanding, however, by one approach the selected status update remains displayed in combination with the chat window. This approach permits the user to have immediate and simultaneous visual access to the status update when forming their chat input. Such an approach comprises one way to provide a chat window in context with the selected status update.

By one approach, in lieu of the foregoing or in combination therewith, the foregoing transmission of the user input automatically includes context information that corresponds to the selected status update. This approach can include, for example, including content from the status update message to thereby spare the user from needing to themselves provide the appropriate informational context for their response.

So configured, the device's chat capability serves more as an embedded capability of another application rather than as a stand-alone function. Such an approach, in turn, helps in various ways to maintain and foster the content context of the primary application (such as the selected status update message referred to above).

These teachings are highly flexible in practice and can be applied in conjunction with a wide variety of applications to thereby further leverage the functionality and utility of those applications. The concepts described herein are also readily scaled to accommodate a variety of application settings and various quantities of contextual information.

For simplicity and clarity of illustration, reference numerals may be repeated among the figures to indicate corresponding or analogous elements. Numerous details are set forth to provide an understanding of the embodiments described herein. The embodiments may be practiced without these details. In other instances, well-known methods, procedures, and components have not been described in detail to avoid obscuring the embodiments described. The description is not to be considered as limited to the scope of the embodiments described herein.

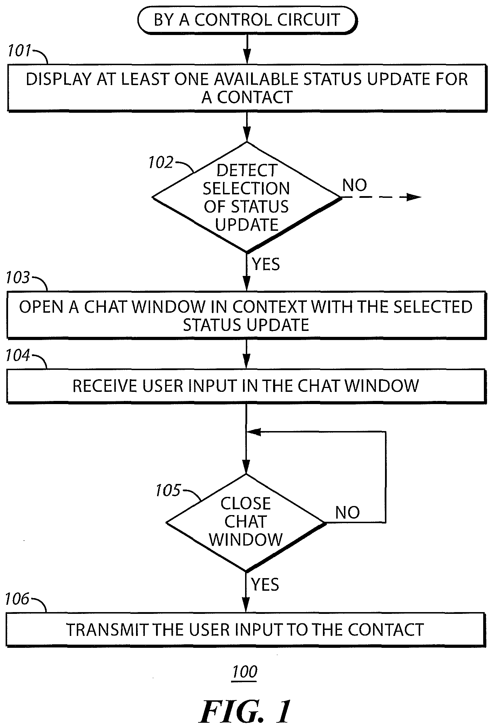

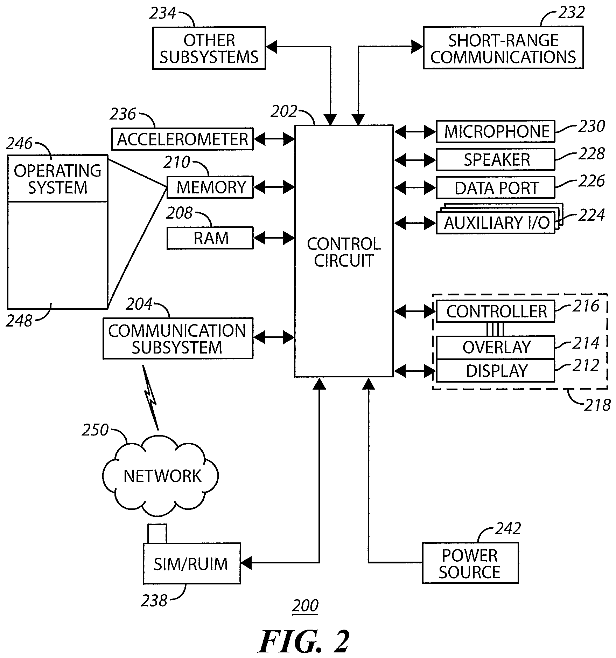

FIG. 1 presents an illustrative process 100 in these same regards. For the sake of this illustrative example it will be presumed that a control circuit carries out this process 100. Referring momentarily to FIG. 2, this control circuit 202 can comprise a part of a portable electronic device 200, such as, but not limited to, a so-called smartphone.

This control circuit 202 is configured to control the overall operation of the portable electronic device 200. Communication functions, including data and voice communications, are performed through a communication subsystem 204. The communication subsystem receives messages from and sends messages to a wireless network 250. The wireless network 250 may be any type of wireless network, including, but not limited to, data wireless networks, voice wireless networks, and networks that support both voice and data communications. A power source 242, such as one or more rechargeable batteries or a port to an external power supply, powers the electronic device 200.

The control circuit 202 interacts with other elements, such as Random Access Memory (RAM) 208, memory 210, a display 212 with a touch-sensitive overlay 214 operably coupled to an electronic controller 216 that together comprise an optional touch-sensitive display 218, an auxiliary input/output (I/O) subsystem 224, a data port 226, a speaker 228, a microphone 230, a short-range communication subsystem 232, and other device subsystems 234 of choice.

One or more user interfaces are provided. Input via a graphical user interface is provided via the touch-sensitive overlay 214. The control circuit 202 interacts with the touch-sensitive overlay 214 via the electronic controller 216. Information, such as text, characters, symbols, images, icons, and other items that may be displayed or rendered on a portable electronic device, is displayed on the touch-sensitive display 218 via the control circuit 202. The control circuit 202 may interact with an accelerometer 236 that may be utilized to detect direction of gravitational forces or gravity-induced reaction forces.

To identify a subscriber for network access, the portable electronic device 200 may utilize a Subscriber Identity Module or a Removable User Identity Module (SIM/RUIM) card 238 for communication with a network, such as the wireless network 250. Alternatively, user identification information may be programmed into the memory 210.

The portable electronic device 200 includes an operating system 246 and software programs, applications, or components 248 that are executed by the control circuit 202 and are typically stored in a persistent, updatable store such as the memory 210. Additional applications or programs may be loaded onto the portable electronic device through the wireless network 250, the auxiliary I/O subsystem 224, the data port 226, the short-range communications subsystem 232, or any other suitable subsystem 234. The memory 210 may comprise a non-transitory storage media that stores executable code that, when executed, causes the control circuit 202 to carry out one or more of the functions or actions described herein.

A received signal such as a text message, an e-mail message, or web page download is processed by the communication subsystem and input to the control circuit 202. The control circuit 202 processes the received signal for output to the display 212 and/or to the auxiliary I/O subsystem 224. A subscriber may generate data items, for example e-mail messages, which may be transmitted over the wireless network 250 through the communication subsystem. For voice communications, the overall operation of the portable electronic device is similar. The speaker 228 outputs audible information converted from electrical signals, and the microphone 230 converts audible information into electrical signals for processing.

The touch-sensitive display 218 may be any suitable touch-sensitive display, such as a capacitive, resistive, infrared, surface acoustic wave (SAW) touch-sensitive display, strain gauge, optical imaging, dispersive signal technology, acoustic pulse recognition, and so forth, as known in the art. A capacitive touch-sensitive display includes a capacitive touch-sensitive overlay 214. The overlay 214 may be an assembly of multiple layers in a stack including, for example, a substrate, a ground shield layer, a barrier layer, one or more capacitive touch sensor layers separated by a substrate or other barrier, and a cover. The capacitive touch sensor layers may comprise any suitable material, such as indium tin oxide (ITO).

One or more touches, also known as touch contacts or touch events, may be detected by the touch-sensitive display 218. The control circuit 202 may determine attributes of the touch, including a location of a touch. Touch location data may include data for an area of contact or data for a single point of contact, such as a point at or near a center of the area of contact.

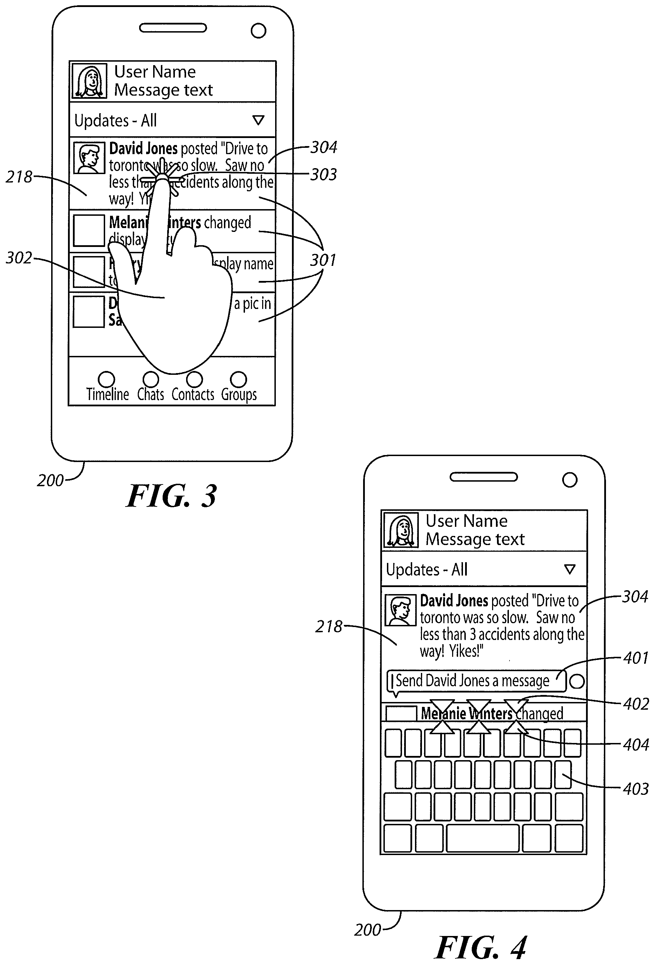

Referring to FIGS. 1 and 3, in this non-limiting example the aforementioned control circuit 202 displays 101, on the aforementioned touch-sensitive display 218, at least one available status update 301, including previously received messages, for corresponding contacts. In this illustrative example, the control circuit 202 displays a plurality of such available status updates 301. Here, each available status update 301 includes a textual identifier for the contact (such as their name or alias), a thumbnail image (which may be, for example, a photographic image of the contact or some corresponding avatar as appropriate), and text comprising part or all of the status update content itself. In this particular illustrative example, each such available status update further includes a textual indication of the relative age of the status update.

Such available status updates 301 can be automatically arranged as desired. As shown in FIG. 3, the available status updates 301 are arranged in chronological order such that the most recently-received available status update 301 appears at the top of the list. These teachings will readily accommodate other approaches in these regards, however. For example, the available status updates 301 could be ordered in alphabetical order (as keyed, for example, to the contact's name) or pursuant to a prioritization preference (where, for example, the user assigns a corresponding priority to various ones of their contacts such that available status updates 301 for higher-prioritized contacts appear higher in the displayed listing).

These teachings will also accommodate, if desired, making this presentation of available status updates 301 a scrollable listing. So configured, the user could assert a scrolling instruction to cause the listing to scroll downwardly or upwardly to bring into view other available status updates 301.

Pursuant to this illustrative example, a user 302 can select a particular one of the available status updates 301 by touching the touch-sensitive display 218 at a location 303 that corresponds to the particular available status update 301. In this example, the user 302 taps and hence selects the top-most displayed available status update 304. The control circuit 202, in turn, detects 102 this selection of this particular status update 304. (In the absence of detecting 102 this selection this process 100 can accommodate any of a variety of responses. Examples of responses can include temporal multitasking (pursuant to which the control circuit 202 conducts other tasks before returning to again monitor for selection of a particular status update 301) as well as simply continually looping back to essentially continuously monitor for this trigger event. These teachings will also accommodate supporting this detection activity via a real-time interrupt capability.)

Upon detecting 102 this selection of a particular status update 304, the control circuit 202 automatically and responsively opens 103 a chat window in context with the selected status update 304 as shown in FIG. 4. This action can comprise, for example, displaying a chat text entry field 401 and a virtual alphanumeric keyboard 403 on the touch-sensitive display 218 while simultaneously continuing to display the selected status update 304. As used herein, the expression "chat" will be understood to refer to a direct, live, digitally-encoded, text-based communication between at least two endpoints (such as two portable communications devices as used by two end users, respectively).

By one approach, this action can include animating a downward expansion 402 of the selected status update 304 window to include the chat text entry field 401 and an upward movement 404 of the virtual alphanumeric keyboard 403 to assume the illustrated position. So configured, the overall chat window (comprising here at least the chat text entry field 401 and the virtual alphanumeric keyboard 403) overlies at least one other available status update 301. (As used herein, the term "overlies" will be understood to refer to both the appearance of overlying as well as actually overlying.)

By one approach, and as illustrated, the chat window overlies all of the unselected, previously-displayed available status updates 301 leaving only the selected available status update 301. So configured, the visual presentation of the selected status update 304 preserves the context of the selected status update 304 in conjunction with the chat opportunity by retaining the informational content of the selected status update 304 on the display where that content remains immediately available to the user.

If desired, the control circuit 202 can be configured to also detect a user tap or other selection event (not shown) that is outside of the chat window and to respond by removing the chat window and returning to the previous display of the plurality of available status updates 301.

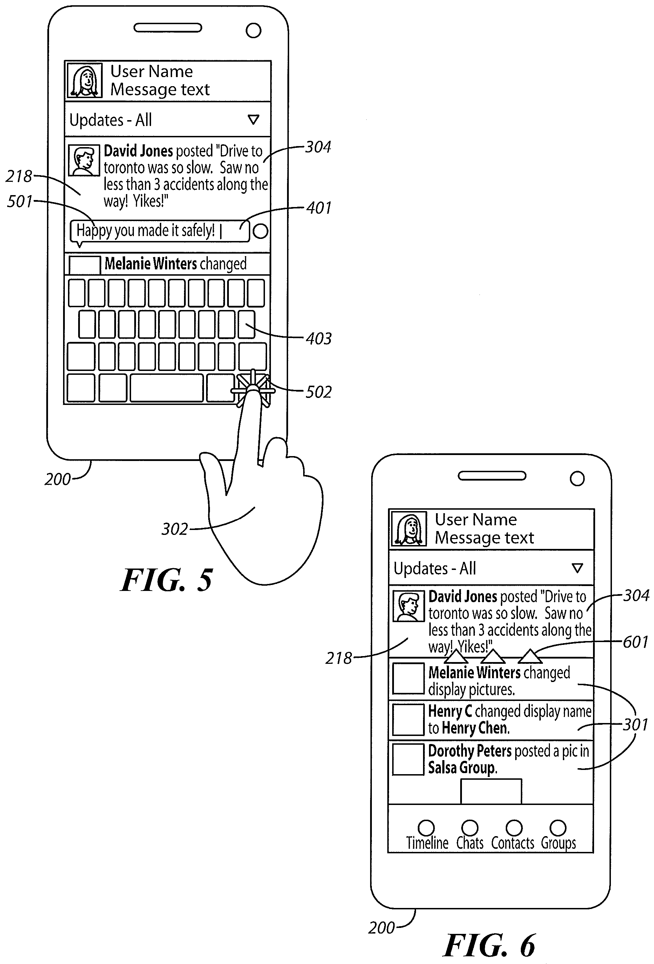

Referring to FIGS. 1 and 5, this process 100 provides for receiving 103 user input 501 as entered via the chat window (and in particular in the aforementioned chat text entry field 401 by asserting appropriate keys of the virtual alphanumeric keyboard 403). FIG. 5 illustrates, in particular, the benefit of preserving the selected status update 304 context; the user can easily, intuitively, and simply look at the selected status update 304 in order to recall the content of that update and thereby inform the substantive composition of their responsive input 501.

In this illustrative example, the virtual alphanumeric keyboard 403 includes at least one key 502 that, when asserted by the user 302, indicates that the user 302 has concluded entering their user input 501 and wishes to close the chat window and assert a send operation as corresponds to that user input 501. Accordingly, this process 100 provides for detecting 105 when the user 302 taps on this key 502 and responding by closing the chat window and transmitting 106 that user input 501 to the contact that corresponds to the selected status update 304.

By one approach, the control circuit 202 can transmit that user input 501 to the contact as a background transmission activity. In such a case, the transmission will occur when and as local computational and/or connectivity resources are available. As a result, the transmission itself may not occur for some many seconds, minutes, or even hours or days depending upon circumstances. As a "background" task, however, such scheduling concerns are dealt with wholly or at least substantially transparently to the user and for the most part the user may be unknowing in these regards.

In such a case, and as illustrated in FIG. 6, the chat window elements can be automatically removed and the presentation returned to the pre-chat display of the plurality of available status updates 301 including the selected status update 304. If desired, this transition can include corresponding animation. For example, the virtual alphanumeric keyboard 403 can move downwardly to reveal the overlaid status updates 301 or, as illustrated, the previously-overlaid status updates 301 can scroll upwardly 601 to now appear to overlay the virtual alphanumeric keyboard 403. The present teachings will of course accommodate numerous other approaches in these regards as desired.

This process 100 will readily accommodate transmitting additional content along with the chat-message transmission of that user input 501. By one approach, for example, this additional content can comprise context information that corresponds to the selected status update 504. When the status update comprises, for example, a personal message text, the control circuit 202 can automatically include with the transmitted chat message a header (or other portion) that reads, "Comment about [personal message text]."As another example, when the status update comprises a display name change, the control circuit 202 can automatically include with the transmitted chat message a header that reads, "Comment about your name change to [display name]." As yet another example, when the status update comprises a display picture change, the control circuit 202 can automatically include with the transmitted chat message a header that reads, "Comment about your display picture."

By one approach, if desired, the additional content can be visually distinguished as compared to the user's chat-message content. This can comprise, for example, using windows to differentiate such content. Such windows can be denoted, for example, by use of differently-colored backgrounds, borders, or the like.

In the specific example set forth above, the control circuit 202 responds to a user's selection of a particular status update by opening a chat window within the status update function to thereby effectively momentarily embed that chat capability within the status update application. It will be understood, however, that the present teachings are not limited to only a status-update application setting. Instead, the described capabilities can be similarly implemented with respect to a user's selection of any number of content items within the context of a given application. As but one of many possibilities in these regards, and by way of another non-limiting example, the present teachings could be employed to open an embedded chat capability while in an email program. In such a case the user could select a given email and proffer a quick chat-based response to the party sending the email instead of replying via the email application itself.

So configured, the chat functionality of a given user platform can be easily and effectively leveraged in favor of other applications to extend the native functionality and/or intuitive usability of those other applications.

The present disclosure may be embodied in other specific forms without departing from its essential characteristics. The described embodiments are to be considered in all respects only as illustrative and not restrictive. The scope of the disclosure is, therefore, indicated by the appended claims rather than by the foregoing description. All changes that come within the meaning and range of equivalency of the claims are to be embraced within their scope.

## Claims

1. A method comprising:
displaying (101), on a display (218) of an electronic device, at least one available status update (301) from a contact;
upon detecting (102) selection of the status update, automatically opening (103) a chat window (401) in context with the selected status update;
receiving (104) user input in the chat window; and
in response to the user closing (105) the chat window, transmitting (106) the user input to the contact.

2. The method of claim 1 wherein displaying on the display the at least one available status update from a contact comprises simultaneously displaying available status updates for a plurality of contacts.

3. The method of claim 2 wherein displaying the chat window comprises, at least in part, overlying at least one other available status update with the chat window.

4. The method of claim 1 wherein opening the chat window in context with the selected status update comprises, at least in part, displaying a chat text entry field and a virtual alphanumeric keyboard (403) while simultaneously displaying the selected status update.

5. The method of claim 1 wherein the user closing the chat window comprises the user asserting a send operation (502) as corresponds to the user input.

6. The method of claim 1 wherein transmitting the user input to the contact further comprises transmitting the user input in combination with context information corresponding to the selected status update.

7. The method of claim 1 wherein transmitting the user input to the contact comprises transmitting the user input to the contact as a background transmission activity.

8. The method of claim 1 wherein the chat window comprises a direct, live, digitally-encoded, text-based communication window.

9. An electronic device comprising:
a display (218);
a wireless transmitter (204); and
a control circuit (202) operably coupled to a touch-sensitive display and the wireless transmitter and configured to carry out the method of any one of claims 1-8.

10. A non-transitory digital memory (210) having stored therein instructions that, when executed by a control circuit, cause the control circuit to carry out the method of any one of claims 1-8.

## Patentansprüche

1. Verfahren, welches Folgendes umfasst:
Anzeigen (101) wenigstens einer verfügbaren Statusaktualisierung (301) von einem Kontakt auf einer Anzeige (218) einer elektronischen Vorrichtung,
nach dem Erkennen (102) einer Auswahl der Statusaktualisierung, automatisches Öffnen (103) eines Chat-Fensters (401) in Zusammenhang mit der ausgewählten Statusaktualisierung,
Empfangen (104) einer Benutzereingabe im Chat-Fenster und
ansprechend darauf, dass der Benutzer das Chat-Fenster schließt (105), Senden (106) der Benutzereingabe zum Kontakt.

2. Verfahren nach Anspruch 1, wobei das Anzeigen der wenigstens einen verfügbaren Statusaktualisierung von einem Kontakt auf der Anzeige das gleichzeitige Anzeigen verfügbarer Statusaktualisierungen für mehrere Kontakte umfasst.

3. Verfahren nach Anspruch 2, wobei das Anzeigen des Chat-Fensters zumindest teilweise das Überlagern wenigstens einer anderen verfügbaren Statusaktualisierung mit dem Chat-Fenster umfasst.

4. Verfahren nach Anspruch 1, wobei das Öffnen des Chat-Fensters in Zusammenhang mit der ausgewählten Statusaktualisierung zumindest teilweise das Anzeigen eines Chat-Texteingabefelds und einer virtuellen alphanumerischen Tastatur (403), während gleichzeitig die ausgewählte Statusaktualisierung angezeigt wird, umfasst.

5. Verfahren nach Anspruch 1, wobei das Schließen des Chat-Fensters durch den Benutzer das Aktivieren eines Absendevorgangs (502) entsprechend der Benutzereingabe durch den Benutzer umfasst.

6. Verfahren nach Anspruch 1, wobei das Senden der Benutzereingabe zum Kontakt ferner das Senden der Benutzereingabe in Kombination mit der ausgewählten Statusaktualisierung entsprechenden Kontextinformationen umfasst.

7. Verfahren nach Anspruch 1, wobei das Senden der Benutzereingabe zum Kontakt das Senden der Benutzereingabe zum Kontakt als Hintergrundübertragungsaktivität umfasst.

8. Verfahren nach Anspruch 1, wobei das Chat-Fenster ein direktes, digital codiertes, textbasiertes Live-Kommunikationsfenster umfasst.

9. Elektronische Vorrichtung, welche Folgendes umfasst:
eine Anzeige (218),
einen Drahtlossender (204) und
eine Steuereinheit (202), die operativ mit einer berührungsempfindlichen Anzeige und dem Drahtlossender gekoppelt ist und dafür ausgelegt ist, das Verfahren nach einem der Ansprüche 1 bis 8 auszuführen.

10. Nichtflüchtiger digitaler Speicher (210) mit darin gespeicherten Befehlen, die, wenn sie durch eine Steuerschaltung ausgeführt werden, bewirken, dass die Steuerschaltung das Verfahren nach einem der Ansprüche 1 bis 8 ausführt.

## Revendications

1. Procédé, comprenant :
l'affichage (101), sur un dispositif d'affichage (218) d'un dispositif électronique, d'au moins une remise à jour d'état disponible (301) à partir d'un contact ;
lors de la détection (102) de la sélection de la remise à jour d'état, l'ouverture automatique (103) d'une fenêtre de discussion instantanée (401) dans le contexte avec la remise à jour d'état sélectionnée ;
la réception (104) d'une entrée d'utilisateur dans la fenêtre de discussion instantanée ; et
en réponse à la fermeture (105) par l'utilisateur de la fenêtre de discussion instantanée, la transmission (106) de l'entrée d'utilisateur au contact.

2. Procédé selon la revendication 1, dans lequel l'affichage sur le dispositif d'affichage de la remise à jour d'état disponible au nombre d'au moins une à partir d'un contact comprend l'affichage simultané de remises à jours d'état disponibles pour une pluralité de contacts.

3. Procédé selon la revendication 2, dans lequel l'affichage de la fenêtre de discussion instantanée comprend, au moins en partie, le recouvrement d'au moins une autre remise à jour d'état disponible avec la fenêtre de discussion instantanée.

4. Procédé selon la revendication 1, dans lequel l'ouverture de la fenêtre de discussion instantanée dans le contexte avec la remise à jour d'état sélectionnée comprend, au moins en partie, l'affichage d'un champ d'entrée de texte de discussion instantanée et d'un clavier alphanumérique virtuel (403) pendant l'affichage simultané de la remise à jour d'état sélectionnée.

5. Procédé selon la revendication 1, dans lequel la fermeture par l'utilisateur de la fenêtre de discussion instantanée comprend la déclaration par l'utilisateur d'une opération d'envoi (502) comme correspondant à l'entrée d'utilisateur.

6. Procédé selon la revendication 1, dans lequel la transmission de l'entrée d'utilisateur au contact comprend de plus la transmission de l'entrée d'utilisateur en combinaison avec une information de contexte correspondant à la remise à jour d'état sélectionnée.

7. Procédé selon la revendication 1, dans lequel la transmission de l'entrée d'utilisateur au contact comprend la transmission de l'entrée d'utilisateur au contact sous la forme d'une activité de transmission de fond.

8. Procédé selon la revendication 1, dans lequel la fenêtre de discussion instantanée comprend une fenêtre de communication basée sur le texte codée de façon numérique en temps réel directe.

9. Dispositif électronique, comprenant :
un dispositif d'affichage (218) ;
un émetteur sans fil (204) ; et
un circuit de commande (202) couplé de façon fonctionnelle à un dispositif d'affichage tactile et à l'émetteur sans fil, et configuré de façon à mettre en oeuvre le procédé selon l'une quelconque des revendications 1 à 8.

10. Mémoire numérique rémanente (210) ayant, mémorisées à l'intérieur de celle-ci, des instructions qui, lorsqu'elles sont exécutées par un circuit de commande, provoquent l'exécution par le circuit de commande du procédé selon l'une quelconque des revendications 1 à 8.
